# EUROPEAN PATENT APPLICATION

(11) **EP 4 753 041 A1**
(43) Date of publication of application: **03.06.2026**
(21) Application number: 25203098.6
(22) Date of filing: 18.09.2025
(51) Int. Cl.: H01M 50/213, H01M 50/244, H01M 50/289, H01M 50/502

(54) **SECONDARY BATTERY**

(30) Priority: 29.11.2024 KR 20240175317
(71) Applicant: SK On Co., Ltd., Seoul 03161 (KR)
(72) Inventor: HEO, Won Tae, 34124 Daejeon (KR); PAIK, Hyung Ju, 34124 Daejeon (KR); LEE, Jung Kwan, 34124 Daejeon (KR); KWAK, Seung Il, 34124 Daejeon (KR); LEE, Dong Gu, 13558 Gyeonggi-do (KR)
(74) Representative: Stolmár & Partner Patentanwälte PartG mbB

(57) **Abstract**

A secondary battery is disclosed. According to one aspect of the present disclosure, there is provided a secondary battery comprising a cell assembly comprising battery cells, first and second frames coupled to the battery cells, and a case accommodating the battery cells and the first and second frames, and a housing in which one or more cell assemblies are accommodated, wherein the first frame comprises a first plate portion and a first support portion protruding from an upper surface of the first plate portion and supporting a side surface of the battery cells, and the second frame comprises a second plate portion and a second support portion protruding from a lower surface of the second plate portion and supporting the side surface of the battery cells.

## Description

### BACKGROUND

### 1. Field of the Invention

Embodiments of the present disclosure relate to a secondary battery.

### 2. Discussion of Related Art

A secondary battery is one of the energy storage means which can be charged and discharged through electrochemical reactions. The secondary battery may be utilized in various fields in which electrical energy is used. For example, secondary batteries are widely utilized in mobile devices such as a cell phone, a notebook, a tablet, and the like, and are being explored for wider utilization in the field of transportation means such as vehicles, aircraft, ships, and the like. Further, demand for secondary batteries is increasing in the field of energy storage systems (ESSs) for utilizing surplus electricity.

Such a secondary battery is widely used for driving or energy storage in medium and large-sized devices such as an electric vehicle or an ESS as well as small devices such as portable electronic devices. In addition, in order to improve power and/or capacity, one battery module may be configured in a form in which a plurality of battery cells are electrically connected to each other, and a plurality of such modules may be connected to form one battery pack.

Recently, a cell-to-pack (CTP) structure has been proposed that omits or simplifies module housing and assembles battery cells directly into the pack. According to the cell-to-pack structure, the space utilization rate is increased, thereby improving energy density, reducing the number of components and processes, and improving manufacturing efficiency.

### SUMMARY

Embodiments of the present disclosure are directed to providing a secondary battery.

In addition, some embodiments of the present disclosure are directed to providing a secondary battery to which a cell-to-pack structure is applied.

In addition, some embodiments of the present disclosure are directed to providing a secondary battery with improved assembly convenience.

In addition, some embodiments of the present disclosure are directed to providing a secondary battery with improved cooling efficiency.

Some embodiments of the present disclosure may be widely applied in the field of green technologies such as an electric vehicle and a battery charging station as well as solar power generation and wind power generation using batteries. Further, some embodiments of the present disclosure may be used in an eco-friendly electric vehicle, a hybrid vehicle, and the like to prevent climate change by suppressing air pollution and greenhouse gas emissions.

According to one aspect of the present disclosure, there is provided a secondary battery comprising: a cell assembly comprising battery cells, first and second frames coupled to the battery cells, and a case accommodating the battery cells and the first and second frames; and a housing in which one or more cell assemblies are accommodated, wherein the first frame comprises a first plate portion and a first support portion protruding from an upper surface of the first plate portion and supporting a side surface of the battery cells, and the second frame comprises a second plate portion and a second support portion protruding from a lower surface of the second plate portion and supporting the side surface of the battery cells.

In some embodiments, the case may be provided so that an inner side surface is supported by the first and second frames.

In some embodiments, each of the battery cells may be supported by one or more first support portions and one or more second support portions.

In some embodiments, the inside of the housing may be filled with a filler.

In some embodiments, insulating oil may be accommodated in the housing, and the battery cells may be immersed in the insulating oil.

In some embodiments, the battery cells may be disposed in a plurality of rows.

In some embodiments, adjacent rows of battery cells may be disposed in a staggered manner.

In some embodiments, first and second protrusions supporting the side surface of the battery cells may be provided on the first and second support portions, respectively.

In some embodiments, a plurality of first and second protrusions spaced apart in a vertical direction may be provided.

In some embodiments, the first protrusion may protrude obliquely downward, and the second protrusion may protrude obliquely upward.

In some embodiments, each of the first and second plate portions may be provided with insertion portions into which end portions of the battery cells are inserted.

In some embodiments, the insertion portions may be provided to pass through the first and second plate portions.

In some embodiments, the insertion portions may be provided by being recessed in the first and second plate portions.

In some embodiments, at least some of the first and second support portions may be provided with first passing portions passing through the first and second support portions in a lateral direction.

In some embodiments, at least some of the first and second support portions may be provided with second passing portions passing through the first and second support portions in a vertical direction.

According to another aspect of the present disclosure, there is provided a secondary battery comprising: a cell assembly comprising battery cells, and first and second frames coupled to the battery cells; and a housing in which one or more cell assemblies are accommodated, wherein the first frame comprises a first plate portion, a first support portion protruding from an upper surface of the first plate portion and supporting a side surface of the battery cells, and a first side wall portion protruding from an edge of the first plate portion, and the second frame comprises a second plate portion, a second support portion protruding from a lower surface of the second plate portion and supporting the side surface of the battery cells, and a second side wall portion protruding from an edge of the second plate portion.

In some embodiments, end portions of the first side wall portion and the second side wall portion may be supported by each other.

In some embodiments, the first side wall portion and the second side wall portion may be joined to each other.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a schematic perspective view of a battery cell according to one embodiment of the present disclosure;
FIG. 2 is a schematic perspective view of an electrode assembly according to one embodiment of the present disclosure;
FIG. 3 is a view schematically illustrating a state in which the electrode assembly of FIG. 2 is wound around a central axis;
FIG. 4 is a view illustrating a state in which electrode tabs at upper and lower ends in the electrode assembly wound as illustrated in FIG. 3 have undergone a flattening process;
FIG. 5 is a schematic perspective view of a secondary battery according to one embodiment of the present disclosure;
FIG. 6 is a schematic perspective view of a cell assembly according to one embodiment of the present disclosure;
FIG. 7 is a cross-sectional view taken along line A-A of the cell assembly of FIG. 6;
FIG. 8 is a perspective view of an electrical connection structure of a cell assembly according to one embodiment of the present disclosure;
FIG. 9 is a perspective view of battery cells and first and second frames according to one embodiment of the present disclosure;
FIG. 10 is a perspective view of the first frame illustrated in FIG. 9;
FIG. 11 is a cross-sectional view illustrating a process of bonding the battery cells and the first and second frames illustrated in FIG. 9;
FIG. 12 is a perspective view of battery cells and first and second frames according to another embodiment of the present disclosure;
FIG. 13 is a perspective view of a first frame according to still another embodiment of the present disclosure;
FIG. 14 is a perspective view of battery cells and first and second frames according to yet another embodiment of the present disclosure;
FIG. 15 is a schematic perspective view of a cell assembly according to yet another embodiment of the present disclosure; and
FIG. 16 is an exploded perspective view of the cell assembly illustrated in FIG. 15.

### DETAILED DESCRIPTION OF EXEMPLARY EMBODIMENTS

Hereinafter, the present disclosure will be described in detail with reference to the accompanying drawings. However, this is merely exemplary, and the present disclosure is not limited to the exemplified specific embodiments.

First, secondary batteries according to embodiments of the present disclosure will be described.

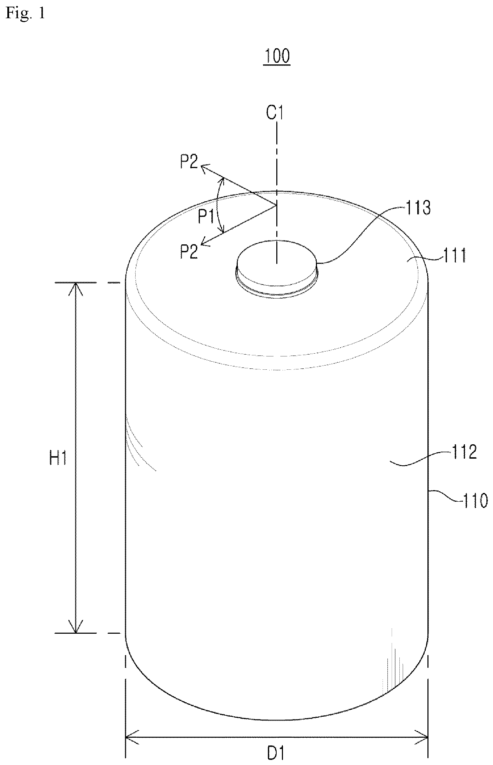

FIG. 1 is a schematic perspective view of a secondary battery according to one embodiment of the present disclosure.

Hereinafter, for convenience, a rotation direction around a central axis C1 shown in FIG. 1 is referred to as a circumferential direction P1, an inward-outward direction toward/from the central axis C1 in a plane perpendicular to the central axis C1 is referred to as a radial direction P2, and an up-down direction along the central axis C1 is referred to as a vertical direction.

Referring to FIG. 1, in some embodiments, a battery cell 100 may comprise a can 110. The can 110 may comprise an inner space in which an electrode assembly 120 is accommodated. In some embodiments, the can 110 may have an upper surface 111 and a side surface 112, and may have a cylindrical shape with an open lower portion. Although not illustrated, the opening at the lower portion of the can 110 may be provided to be appropriately closed by a cap plate or the like.

In some embodiments, a rivet 113 may be provided on the upper surface 111 of the can 110. The rivet 113 may function as one electrode terminal. For example, the rivet 113 may function as a positive electrode terminal. In the above, the remaining area of the can 110 excluding the rivet 113 may function as the other electrode terminal corresponding to the rivet 113. For example, the remaining area of the upper surface 111 of the can 110 excluding the rivet 113 may function as a negative electrode terminal. In some embodiments, a gasket for electrical insulation and mechanical sealing may be provided between the rivet 113 and the can 110.

In some embodiments, the can 110 may be provided in a cylindrical shape having a predetermined diameter D1 and height H1. In other words, the battery cell 100 may be provided in the cylindrical shape having the predetermined diameter D1 and height H1. For example, the battery cell 100 may have a diameter of 46 mm and a height of 80 mm. In some cases, the battery cell 100 having such a form factor may be referred to as a '4680 battery.' As another example, the battery cell 100 may have a diameter of 46 mm and a height of 80 mm, a diameter of 46 mm and a height of 95mm, or a diameter of 46 mm and a height of 110 mm. In some cases, the battery cell 100 having such a form factor may be referred to as a '46xx battery.' In the '46xx', 'xx' may describe a height of the corresponding form factor. As still another example, the battery cell 100 may have a diameter of 48 mm and a height of 75 mm, a diameter of 48 mm and a height of 80 mm, or a diameter of 48 mm and a height of 110 mm. In some cases, the battery cell 100 having the form factor may be referred to as a '48xx battery.' In the '48xx', 'xx' may describe a height of the corresponding form factor. However, in the present disclosure, the diameter D1 and the height H1 of the battery cell 100 may be variously changed, and are not necessarily limited to those exemplified above.

Meanwhile, although the cylindrical battery cell 100 is illustrated in the present description, the form factor of the battery cell 100 according to the embodiments of the present disclosure is not necessarily limited to the exemplified cylindrical type. The battery cell 100 according to the embodiments of the present disclosure may be variously implemented or applied as a coin type, a prismatic type, a pouch type, or other atypical shapes within the scope comprising the technical idea to be described below.

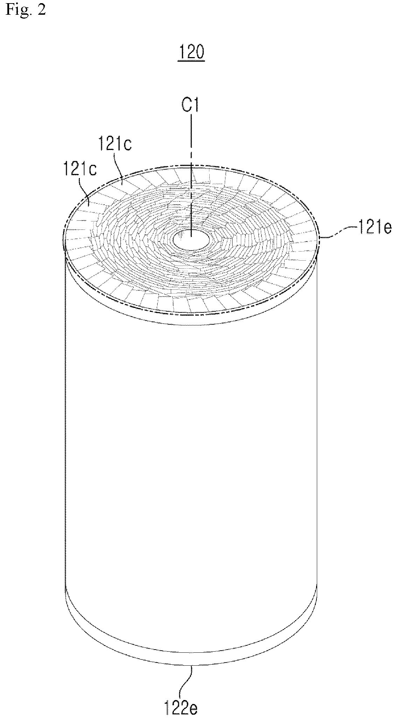

FIG. 2 is a schematic perspective view of an electrode assembly according to one embodiment of the present disclosure.

Referring to FIG. 2, in some embodiments, the battery cell 100 may comprise the electrode assembly 120. The electrode assembly 120 may be accommodated in the can 110 as described above. In some embodiments, the electrode assembly 120 may be wound around the central axis C1 to be provided in the form of a cylindrical roll. Such a roll-shaped electrode assembly 120 may be referred to as a jelly roll or the like in the art.

In some embodiments, the electrode assembly 120 may comprise bonding surfaces 121e and 122e at one or both end portions in a direction of the central axis C1. That is, the electrode assembly 120 may comprise the bonding surfaces 121e and 122e at upper and/or lower end portions, respectively. In the illustrated embodiment, the bonding surfaces 121e and 122e are provided at the upper and lower end portions of the electrode assembly 120, respectively. Hereinafter, for convenience, the bonding surface 121e provided at the upper end of the electrode assembly 120 is referred to as a first bonding surface 121e, and the bonding surface 122e provided at the lower end of the electrode assembly 120 is referred to as a second bonding surface 122e.

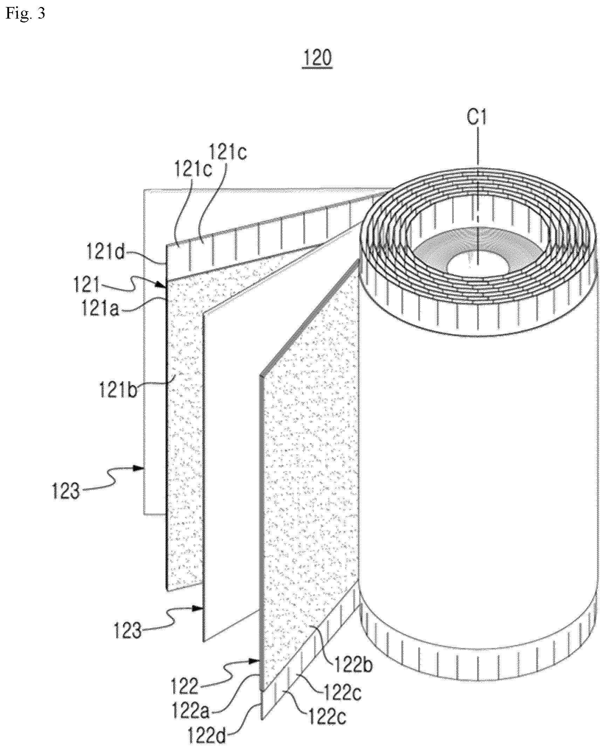

In the above, a plurality of electrode tabs 121c and 122c may be bent toward the central axis C1 at each of the bonding surfaces 121e and 122e. That is, the first bonding surface 121e may have a plurality of first electrode tabs 121c that are bent toward the central axis C1 at the upper end of the electrode assembly 120, and the second bonding surface 122e may have a plurality of second electrode tabs 122c that are bent toward the central axis C1 at the lower end of the electrode assembly 120 (see FIG. 3). In other words, the first bonding surface 121e may be provided as a schematic surface formed by the plurality of bent first electrode tabs 121c, and the second bonding surface 122e may be provided as a schematic surface formed by the plurality of bent second electrode tabs 122c.

In the battery cell 100, the plurality of electrode tabs 121c and 122c may form predetermined bonding surfaces 121e and 122e, and may be electrically connected to an electrode terminal through the bonding surfaces 121e and 122e. That is, in the battery cell 100, a lead tab is omitted, and each bonding surface 121e and 122e may replace the function of the lead tab. In some cases, such a battery cell 100 may be referred to as a tabless battery or the like.

In some embodiments, each of the bonding surfaces 121e and 122e as described above may be bonded to a current collector plate or a cap plate. For example, the first bonding surface 121e may be welded to the current collector plate at the upper end of the electrode assembly 120, and the second bonding surface 122e may be welded to the other current collector plate at the lower end of the electrode assembly 120. As another example, the first bonding surface 121e may be welded to the current collector plate at the upper end of the electrode assembly 120, and the second bonding surface 122e may be welded to the cap plate at the lower end of the electrode assembly 120. Accordingly, the bonding surfaces 121e and 122e may be electrically connected to the current collector plate or the cap plate.

FIG. 3 is a view schematically illustrating a state in which the electrode assembly of FIG. 2 is wound around the central axis.

Referring to FIG. 3, in some embodiments, the electrode assembly 120 may comprise a first electrode 121 and a second electrode 122 with a separator 123 interposed therebetween. The first electrode 121 and/or the second electrode 122 may be electrodes manufactured by an electrode manufacturing device 200. The separator 123 and the first and second electrodes 121 and 122 may be wound around the central axis C1. The first electrode 121 may function as a positive electrode or a negative electrode, and the second electrode 122 may function as a negative electrode or a positive electrode corresponding thereto. In the present description, it is assumed that the first electrode 121 is a positive electrode and the second electrode 122 is a negative electrode.

In some embodiments, the first electrode 121 and the second electrode 122 may respectively comprise metal foils 121a and 122a wound around the central axis C1, active materials 121b and 122b provided on at least one surfaces of the metal foils 121a and 122a, and the plurality of electrode tabs 121c and 122c provided in one end portion areas of the metal foils 121a and 122a along the direction of the central axis C1 and bent toward the central axis C1. For convenience, in the following, the metal foil 121a, the active material 121b, and the electrode tab 121c corresponding to the first electrode 121 will be referred to as a first metal foil 121a, a first active material 121b, and a first electrode tab 121c, respectively, and the metal foil 122a, the active material 122b, and the electrode tab 122c corresponding to the second electrode 122 will be referred to as a second metal foil 122a, a second active material 122b, and a second electrode tab 122c, respectively.

In some embodiments, the first electrode 121 may comprise the first metal foil 121a. For example, the first metal foil 121a may comprise aluminum, stainless steel, nickel, titanium, alloys thereof, or the like. In addition, the first electrode 121 may comprise the first active material 121b provided on at least one surface of the first metal foil 121a. In some embodiments, the first active material 121b may comprise a compound capable of reversibly intercalating and deintercalating lithium ions. For example, the first active material 121b may comprise a lithium-nickel metal oxide, and in some cases, the lithium-nickel metal oxide may further comprise cobalt, manganese, aluminum, and the like.

Similarly, in some embodiments, the second electrode 122 may comprise the second metal foil 122a. For example, the second metal foil 122a may comprise copper, stainless steel, nickel, titanium, alloys thereof, or the like. In addition, the second electrode 122 may comprise the second active material 122b provided on at least one surface of the second metal foil 122a. In some embodiments, the second active material 122b may comprise a compound capable of reversibly intercalating and deintercalating lithium ions. For example, the second active material 122b may comprise a carbon-based material such as crystalline carbon, amorphous carbon, a carbon composite, and a carbon fiber. Alternatively, the second active material 122b may comprise lithium metal, a lithium alloy, a silicon-containing material, a tin-containing material, or the like.

The separator 123 may be provided between the first electrode 121 and the second electrode 122. The separator 123 may be provided to limit an electrical short circuit between the first and second electrodes 121 and 122 and generate a flow of ions. In some embodiments, the separator 123 may comprise a porous polymer film, a porous nonwoven fabric, or the like. For example, the porous polymer film may comprise a polyolefin-based polymer such as an ethylene polymer, a propylene polymer, an ethylene/butene copolymer, an ethylene/hexene copolymer, and an ethylene/methacrylate copolymer. In addition, the porous nonwoven fabric may comprise high melting point glass fibers, polyethylene terephthalate fibers, and the like.

Meanwhile, in some embodiments, the first electrode 121 may comprise the first electrode tab 121c. In the illustrated embodiment, the first electrode tab 121c is provided at an upper end portion of the first electrode 121. As described above, a plurality of first electrode tabs 121c may be provided, and the plurality of first electrode tabs 121c may be disposed in a direction in which the first electrode 121 is wound. In addition, the first electrode tab 121c may be provided in an upper end area of the first metal foil 121a in which the coating of the first active material 121b is omitted. In other words, the first electrode 121 may comprise a first uncoated portion 121d, in which the first active material 121b is not applied, and the first electrode tab 121c may be provided in the first uncoated portion 121d.

Similarly, in some embodiments, the second electrode 122 may comprise the second electrode tab 122c. In the illustrated embodiment, the second electrode tab 122c is provided at a lower end portion of the second electrode 122. The second electrode tab 122c may be provided in a second uncoated portion 122d where the second active material 122b is not applied, and a plurality of electrode tabs 122c may be provided.

Meanwhile, the separator 123 may be provided between the first electrode 121 and the second electrode 122 as described above. In some embodiments, an upper end portion of the separator 123 may be disposed between the first electrode tab 121c and an upper end of the second electrode 122. The upper end portion of the separator 123 may function to electrically insulate the first electrode tab 121c from the second electrode 122. Similarly, a lower end portion of the separator 123 may be disposed between a lower end of the first electrode 121 and the second electrode tab 122c. The lower end portion of the separator 123 may function to electrically insulate the first electrode 121 from the second electrode tab 122c.

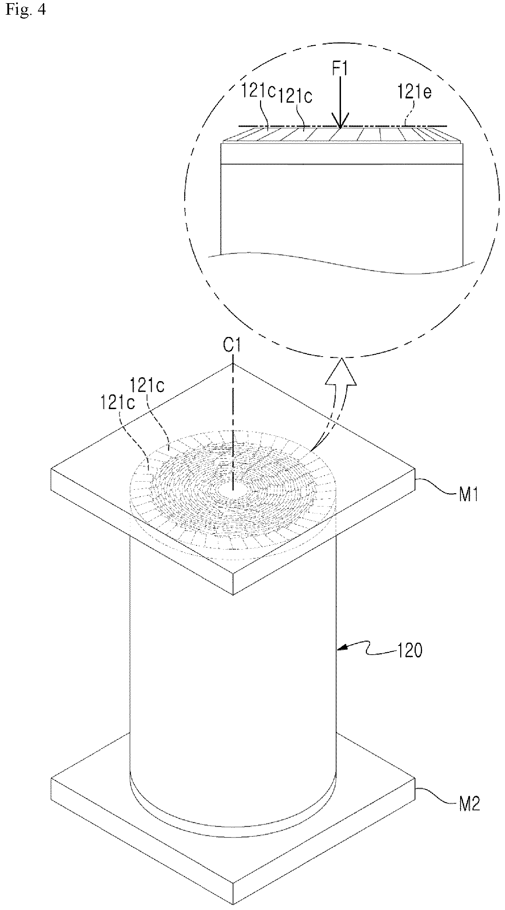

FIG. 4 is a view illustrating a state in which electrode tabs at the upper and lower ends in the electrode assembly wound as illustrated in FIG. 3 have undergone a flattening process.

Referring to FIG. 4, the electrode assembly 120 wound as shown in FIG. 3 may undergo a flattening process in which the first and second electrode tabs 121c and 122c are bent toward the central axis C1 and the bent first and second electrode tabs 121c and 122c are pressed up and down. In the flattening process, the first and second electrode tabs 121c, 122c may be pressed (F1) through predetermined pressing devices M1, M2, respectively, thereby causing the first and second electrode tabs 121c and 122c to form the first and second bonding surfaces 121e and 122e as shown in FIG. 2. Thereafter, a current collector, a cap plate, or the like may be appropriately bonded to the first and second bonding surfaces 121e and 122e, respectively. For example, a current collector may be disposed on the first bonding surface 121e, and the current collector may be welded to the first bonding surface 121e by laser welding.

Next, a secondary battery according to embodiments of the present disclosure will be described.

Meanwhile, the x, y, and z directions mentioned below are intended to explain the present disclosure so that it can be clearly understood, and it goes without saying that each direction may be defined differently depending on where the reference is placed.

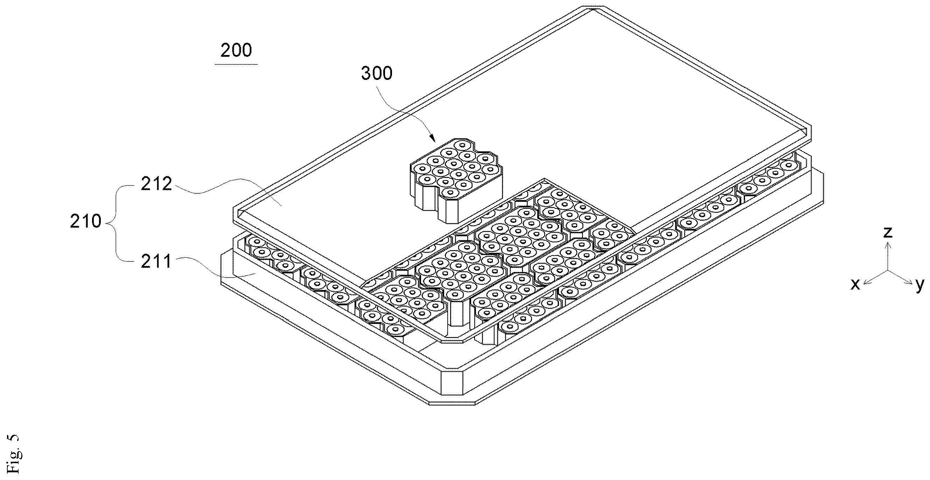

FIG. 5 is a schematic perspective view of a secondary battery according to one embodiment of the present disclosure.

Referring to FIG. 5, in some embodiments, the secondary battery 200 may comprise a cell assembly 300 and a housing 210 in which one or more cell assemblies 300 are accommodated. The cell assembly 300 may comprise battery cells 100, first and second frames 310 and 320, and a case 330. A plurality of battery cells 100 may be provided and coupled to the first and second frames 310 and 320, and the coupled battery cells 100 and first and second frames 310 and 320 may be accommodated in the case 330. One or more cell assemblies 300 may be accommodated in the housing 210, for example, 24 cell assemblies 300 may be accommodated as illustrated in the drawing. In addition, the cell assembly 300 comprises a plurality of battery cells 100, for example, as illustrated in the drawing, one cell assembly 300 may comprise 16 battery cells 100. That is, the secondary battery 200 illustrated in FIG. 5 comprises a total of 384 battery cells 100. The total number of battery cells 100 comprised in the secondary battery 200 of the present disclosure may be appropriately adjusted in consideration of required power, battery cell capacity, form factor, and the like, and accordingly, the number of battery cells 100 comprised in each cell assembly 300 and the number of cell assemblies 300 accommodated in the housing 210 may be appropriately designed.

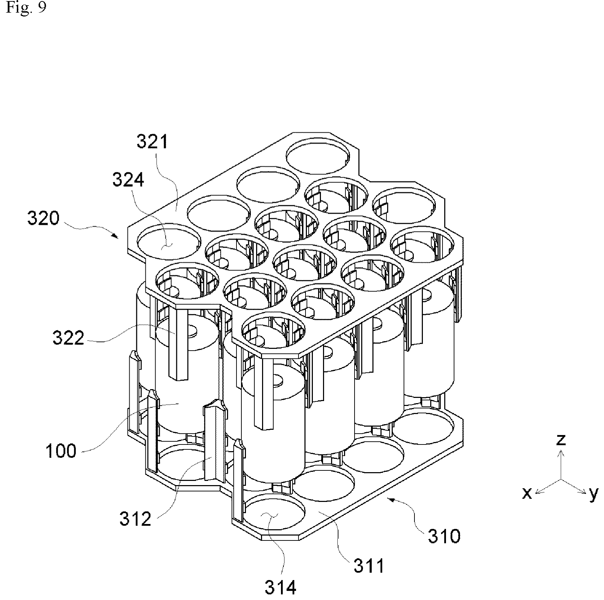

Meanwhile, in some embodiments, the first frame 310 may comprise a first plate portion 311 and a first support portion 312, and the second frame 320 may comprise a second plate portion 321 and a second support portion 322 (see FIG. 9). In addition, the first support portion 312 may protrude from an upper surface of the first plate portion 311 and support a side surface of the battery cell 100, and the second support portion 322 may protrude from a lower surface of the second plate portion 321 and support the side surface of the battery cell 100. In addition, in some embodiments, as will be described in detail below, the first plate portion 311 and the second plate portion 321 may be provided with insertion portions 314 and 324 into which the ends of the battery cells 100 are inserted. Each battery cell 100 may have a lower end portion inserted into the insertion portion 314 of the first plate portion 311 and an upper end portion inserted into the insertion portion 324 of the second plate portion 321. In addition, the first and second support portions 312 and 322 may be inserted into the space between the battery cells 100 and support the side surface of the battery cell 100. The first and second support portions 312 and 322 of the first and second frames 310 and 320 may be inserted into the space between the battery cells 100 at the lower and upper sides of the battery cell 100, respectively, and may be coupled to the battery cell 100. The arrangement of the battery cells 100 may be fixed while being coupled to the first and second frames 310 and 320. According to such a structure, the battery cell 100 may be supported and fixed by simply combining the first and second frames 310 and 320 with the battery cell 100 at the upper and lower sides, thereby improving the assembly convenience of the cell assembly 300. In addition, the number of battery cells 100 provided between the first and second frames 310 and 320 and the corresponding arrangement of the insertion portions 314 and 324 and the first and second support portions 312 and 322 may be appropriately set, and secondary batteries of various specifications may be produced.

In some embodiments, the first and second frames 310 and 320 and the case 330 may be formed of an insulating material. Inside the cell assembly 300, the battery cells 100 are coupled by the first and second frames 310 and 320 and spatially separated from each other, and as the first and second frames 310 and 320 are made of an insulating material, a short circuit between the battery cells 100 may be prevented. Furthermore, a short circuit between the cell assemblies 300 may be prevented by manufacturing the case 330 accommodating the cell assembly 300 from an insulating material. In some embodiments, the first and second frames 310 and 320 and the case 330 may be manufactured from plastic. In some embodiments, the first and second frames 310 and 320 and the case 330 may be injection molded. Meanwhile, the electrical connection structure between the battery cells 100 in the cell assemblies 300 and the electrical connection structure between the cell assemblies 300 will be described below.

In some embodiments, the housing 210 may comprise a main body 211 and a cover 212. The main body 211 may provide an accommodation space in which one or more cell assemblies 300 may be accommodated. In the main body 211, the accommodation space is open at one side (e.g., an upper side) to accommodate one or more cell assemblies 300, and the cover 212 may cover the one open side of the accommodation space.

In some embodiments, the housing 210 may comprise a cooling system (not shown) for cooling the battery cell 100. The structure of the cooling system is not particularly limited, but for example, a cooling flow path through which cooling water flows may be installed in the accommodation space of the main body 211 to cool the cell assembly 300. Alternatively, as will be described in detail below, insulating oil is accommodated in the housing 210 so that the entire battery cell 100 is immersed, and the cooling system may be a system for cooling and circulating the insulating oil.

In some embodiments, the secondary battery 200 may be a battery pack having a cell-to-pack structure. The cell-to-pack structure is a structure for omitting or simplifying a structure for modularizing a battery cell, and the secondary battery 200 according to the present disclosure may be a battery pack having a cell-to-pack structure in which the battery cell 100 and the cell assembly 300 comprising the case 330 in which the battery cell 100 is accommodated are directly accommodated in the housing 210. Therefore, the space utilization rate may be increased, thereby improving energy density, reducing the number of parts and processes, and improving manufacturing efficiency.

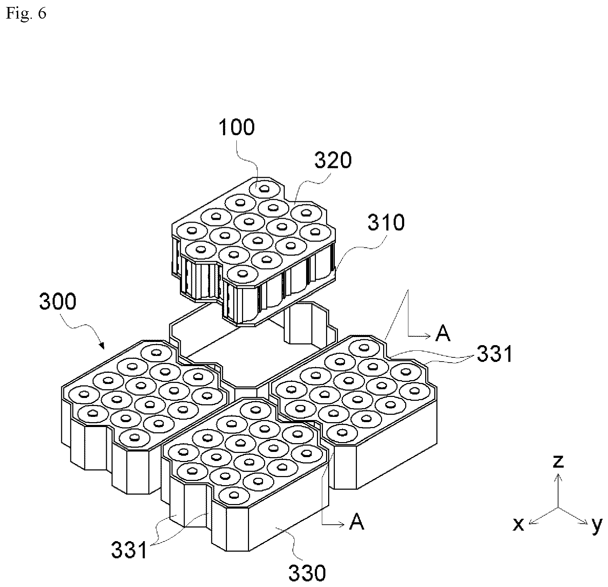

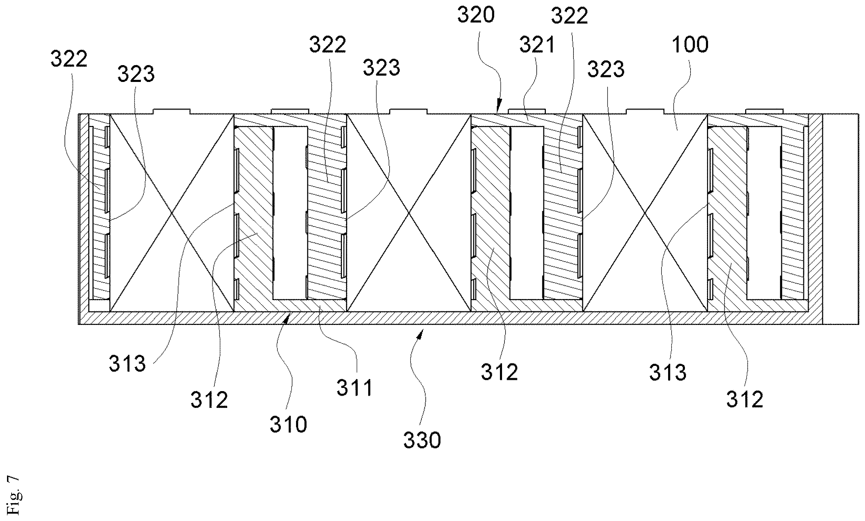

FIG. 6 is a schematic perspective view of a cell assembly according to one embodiment of the present disclosure and FIG. 7 is a cross-sectional view taken along line A-A of the cell assembly of FIG. 6.

Referring to FIGS. 6 and 7, in some embodiments, the case 330 accommodating the battery cell 100 and the first and second frames 310 and 320 may be provided with a structure that allows adjacent cases to interlock with each other. For example, the case 330 is provided with a protruding and recessed structure 331 on at least a portion of the outer surface, so that the protruding and recessed structures 331 of adjacent cases may interlock with each other. In the drawing, it is exemplified that the protruding and recessed structures 331 are provided on both side surfaces of the case 330 in the x direction, so that adjacent cases in the x direction interlock with each other. Due to the interlocking structure between the cases 330, the support force between the cell assemblies 300 accommodated in the housing 210 is reinforced, thereby improving structural stability.

In some embodiments, the case 330 may be provided such that an inner surface thereof is supported by the first and second frames 310 and 320. The case 330 and the first and second frames 310 and 320 are supported by each other, and an empty space inside the case 330 is minimized and energy density may be secured. In addition, the combined form of the battery cell 100 and the first and second frames 310 and 320 in which the first and second support portions 312 and 322 are inserted into the space between the battery cells 100 may be fixed.

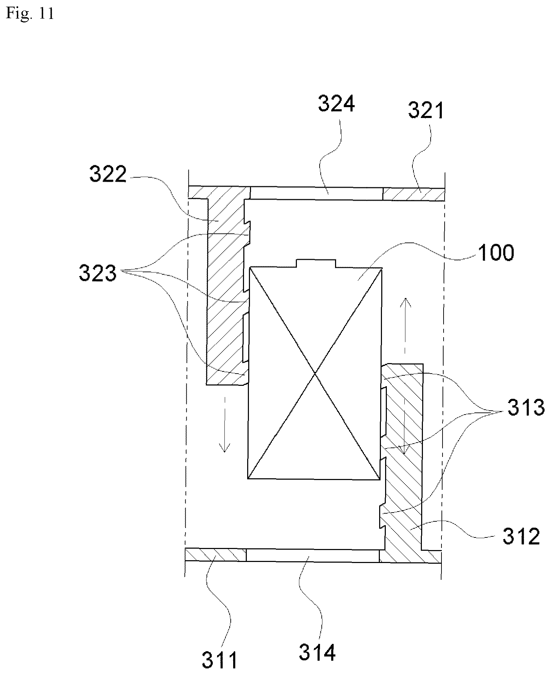

In some embodiments, each battery cell 100 may be supported by at least one first support portion 312 and at least one second support portion 322. Furthermore, each battery cell 100 may be supported by at least three first and second support portions 312 and 322. The first and second plate portions 311 and 321 may be coupled to the lower end and the upper end of the battery cell 100, and the first and second support portions 312 and 322 may support the middle portion of the battery cell 100. Only a partial area of the side surface of the battery cell 100 may be supported by the first and second support portions 312 and 322. Each battery cell 100 may have its end portions inserted into the insertion portions 314 and 324 of the first and second plate portions 311 and 321 and its side surface supported by the first and second support portions 312 and 322, and may be restrained in a lateral direction, that is, x and y directions. In addition, as will be described below in detail, first and second protrusions 313 and 323 provided on the first and second support portions 312 and 322 are inclined in a vertical direction, so that the battery cell 100 may be restrained in the vertical direction, that is, in the z direction (see FIG. 11). According to the above structure, the structural stability of the battery cell 100 and the first and second frames 310 and 320 may be secured while minimizing the volume and weight of the first and second frames 310 and 320. Furthermore, since a contact area between the battery cell 100 and the first and second frames 310 and 320 may be minimized, the cooling efficiency of the battery cell 100 may be improved.

In some embodiments, the inside of the housing 210 may be filled with a filler. That is, after one or more cell assemblies 300 are accommodated in the accommodation space of the housing 210, a filler may be filled. The filler may be filled in the housing 210 and then cured to fix the cell assembly 300 to the housing 210. The filler may be, for example, a foamed urethane-based material. The filler may be filled in the space between the cell assemblies 300 inside the housing 210, and may also be filled in the space between the case 330, the battery cell 100, and the first and second frames 310 and 320 inside the cell assembly 300.

In some embodiments, insulating oil may be accommodated in the housing 210, and the battery cells 100 may be immersed in the insulating oil. The entire battery cell 100 may be immersed in the insulating oil in the housing 210, and a cooling system for circulating and cooling the insulating oil may be provided in the housing 210, so that the insulating oil may be circulated and the battery cell 100 may be cooled. The insulating oil is a fluid having insulating performance, and may be any one of hydrofluoroether, fluoroketone, and ethylene glycol. The main body 211 may be provided with an inlet port and an outlet port connected to the accommodation space, and the insulating oil may circulate through the inlet/outlet port to cool the battery cell 100. The cooling system may comprise a pump for circulating the insulating oil, a chiller for cooling the refrigerant, and a heat exchanger for exchanging heat between the refrigerant and the insulating oil. In addition, the insulating oil accommodated inside the housing 210 may protect the battery cell 100 from external contaminants.

Meanwhile, in some embodiments, a filling hole (not illustrated) for filling a filler into the case 330 may be provided in the case 330 or the second plate portion 321. After the coupled battery cell 100 and first and second frames 310 and 320 are inserted into the case 330, the filler may be filled into the case 330 through the filling hole. Alternatively, in some embodiments, the battery cell 100 and the first and second frames 310 and 320 may be inserted into case 330 after the filler is filled into case 330.

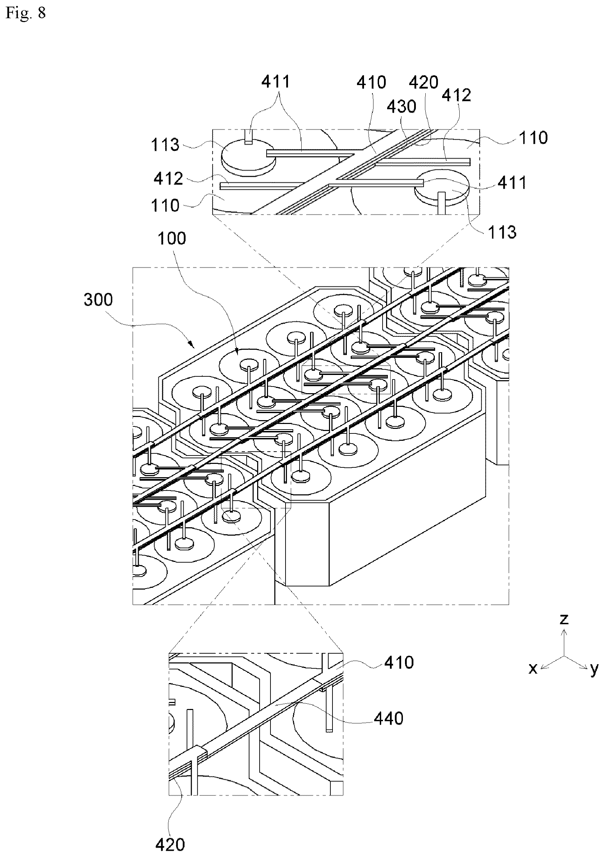

FIG. 8 is a perspective view of an electrical connection structure of a cell assembly according to one embodiment of the present disclosure.

Referring to FIG. 8, in some embodiments, the battery cells 100 of the cell assembly 300 may be electrically connected by a first bus bar 410 and a second bus bar 420. Furthermore, adjacent cell assemblies 300 may be electrically connected by a connection portion 440.

In some embodiments, the first bus bar 410 may be a positive electrode bus bar and comprise a plurality of first branches 411 electrically connected to the rivets 113 of the battery cells 100. In addition, the second bus bar 420 may be a negative electrode bus bar and comprise a plurality of second branches 412 electrically connected to the cans 110 of the battery cells 100. The upper end of the battery cell 100 may be exposed upward through the insertion portion 324 of the second plate portion 321, and the first bus bar 410 and the second bus bar 420 may be electrically connected to the exposed rivet 113 and upper surface 111 of the can 110. An insulating portion 430 may be provided between the first bus bar 410 and the second bus bar 420. That is, the battery cells 100 of each cell assembly 300 may be connected in parallel to each other by the first bus bar 410 and the second bus bar 420. In addition, the first bus bar 410 of one cell assembly 300 and the second bus bar 420 of another cell assembly 300 among adjacent cell assemblies 300 are connected to the connection portion 440, and the adjacent cell assemblies 300 may be connected in series to each other. One end of the connection portion 440 may be connected to the first bus bar 410 of one cell assembly 300, and the other end thereof may be connected to the second bus bar 420 of the other cell assembly 300. The connection portion 440 and the first and second bus bars 410 and 420 on both sides connected thereto may be integrally provided. A first branch 411 may be welded to the rivet 113, and a second branch 412 may be welded to the can 110. However, the electrical connection structure by the first and second bus bars 410 and 420 and the connection portion 440 is merely exemplary, and the electrical connection structure of the battery cell 100 and the cell assembly 300 may also have other structures.

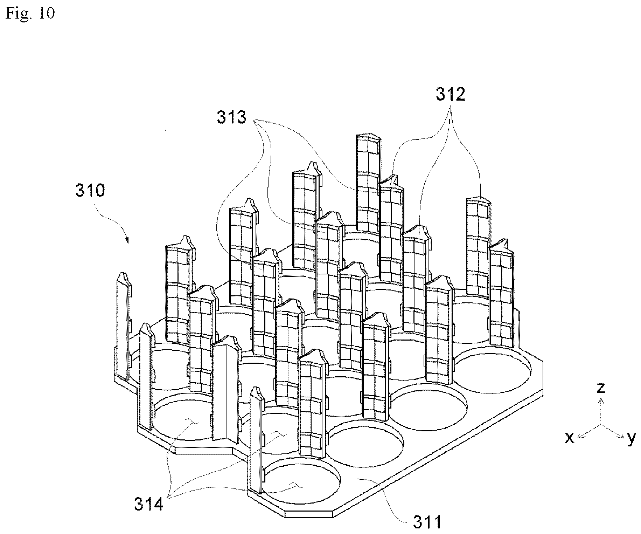

FIG. 9 is a perspective view of the battery cell and the first and second frames according to one embodiment of the present disclosure, FIG. 10 is a perspective view of the first frame illustrated in FIG. 9, and FIG. 11 is a cross-sectional view illustrating a process of bonding the battery cell and the first and second frames illustrated in FIG. 9.

Referring to FIGS. 9 and 10, in some embodiments, the first frame 310 may comprise the first plate portion 311 and the first support portion 312 protruding from the upper surface of the first plate portion 311 and supporting the side surface of the battery cell 100, and the second frame 320 may comprise the second plate portion 321 and the second support portion 322 protruding from the lower surface of the second plate portion 321 and supporting the side surface of the battery cell 100.

In some embodiments, the first frame 310 and the second frame 320 may have the same shape. However, the first frame 310 and the second frame 320 may have symmetrical shapes based on the x, y, and z directions. Therefore, the shape of the second frame 320 may be easily understood from the shape of the first frame 310 illustrated in FIG. 10.

In some embodiments, the battery cells 100 may be disposed in a plurality of rows. The plurality of battery cells 100 comprised in the cell assembly 300 may be disposed in a plurality of rows. The battery cells 100 are disposed in one row in the x-direction, and a plurality of such rows may be disposed in the y-direction. The first and second frames 310 and 320 may be supported on both y-direction side surfaces of each row of battery cells 100. A plurality of first and second frames 310 and 320 may be provided, but disposed adjacent to each other, and one row of battery cells 100 may be provided between adjacent first and second frames 310 and 320.

In some embodiments, the battery cells 100 may be arranged such that adjacent rows are staggered. One row of battery cells 100 and the row adjacent thereto may be disposed alternately in the x-direction. Accordingly, the y-direction spacing between adjacent rows may be reduced, and energy density may be improved.

In some embodiments, the arrangement of the battery cells 100 may be supported and fixed by the first and second frames 310 and 320.

In some embodiments, each of the first and second support portions 312 and 322 may be inserted into the space between the battery cells 100 and support the side surface of the battery cell 100. The first and second support portions 312 and 322 protrude from the upper and lower surfaces of the first and second plate portions 311 and 321, respectively, and support the side surface of the battery cell 100, and the shape of the first and second support portions 312 and 322 may vary depending on the arrangement shape of the battery cell 100 and the number of battery cells 100 supported by the corresponding support portion. In the embodiment illustrated in the drawing, each of the first and second support portions 312 and 322 may have a substantially triangular prism shape, but some of the first and second support portions 312 and 322 may support three battery cells 100, some of the first and second support portions 312 and 322 may support two battery cells 100, and the remaining first and second support portions 312 and 322 may support one battery cell 100.

In some embodiments, the first and second protrusions 313 and 323 supporting the side surface of the battery cell 100 may be provided on the first and second support portions 312 and 322, respectively. The first and second protrusions 313 and 323 may be provided on surfaces of the first and second support portions 312 and 322 facing the battery cell 100. That is, in the embodiment illustrated in the drawing, some of the first and second support portions 312 and 322 supporting three battery cells 100 may be provided with the first and second protrusions 313 and 323 on all three surfaces thereof, some of the first and second support portions 312 and 322 supporting two battery cells 100 may be provided with the first and second protrusions 313 and 323 on two surfaces thereof, and the remaining first and second support portions 312 and 322 supporting one battery cell 100 may be provided with first and second protrusions 313 and 323 on one surface thereof.

In some embodiments, a plurality of first and second protrusions 313 and 323 may be spaced apart from each other in the vertical direction. Only end portions of the first and second protrusions 313 and 323 support the battery cell 100, and the first and second support portions 312 and 322 may not support the battery cell 100 at portions between the vertically spaced apart first and second protrusions 313 and 323. Therefore, the contact area between the battery cell 100 and the first and second frames 310 and 320 may be further reduced, and the cooling efficiency of the battery cell 100 may be improved.

Referring to FIG. 11, in some embodiments, the first protrusion 313 may protrude obliquely downward, and the second protrusion 323 may protrude obliquely upward. As the first protrusion 313 protrudes obliquely downward, the first support portion 312 may be easily inserted into the space between the battery cells 100 from the lower side to the upper side. However, the first support portion 312 may be prevented from moving upward and being separated from the space between the battery cells 100. That is, the support force between the first support portion 312 and the battery cell 100 may be improved by the inclined shape of the first protrusion 313, and it may be difficult for the first frame 310 to be easily separated upward. Likewise, as the second protrusion 323 protrudes obliquely upward, the second support portion 322 may be easily inserted into the space between the battery cells 100 from the upper side to the lower side, but the second support portion 322 may be prevented from moving downward and being separated from the space between the battery cells 100. That is, the support force between the second support portion 322 and the battery cell 100 may be improved by the inclined shape of the second protrusion 323, and it may be difficult for the second frame 320 to be easily separated upward. Conversely, the battery cell 100 may be difficult to move upward with respect to the first support portion 312 and may be difficult to move downward with respect to the second support portion 322. Therefore, the battery cell 100 is fixed to the first and second frames 310 and 320 in the vertical direction, that is, in the z-direction, by the first and second protrusions 313 and 323, and structural stability may be secured.

Referring back to FIGS. 9 and 10, in some embodiments, the first and second plate portions 311 and 321 may comprise the insertion portions 314 and 324 into which end portions of the battery cells 100 are inserted, respectively. A lower end of the battery cell 100 may be inserted into the insertion portion 314 of the first plate portion 311, an upper end of the battery cell 100 may be inserted into the insertion portion 324 of the second plate portion 321, and the battery cell 100 may be fixed in a lateral direction with respect to the first and second frames 310 and 320 in x and y directions, thereby securing structural stability.

In some embodiments, the insertion portions 314 and 324 may be provided to pass through the first and second plate portions 311 and 321, respectively. The insertion portions 314 and 324 may pass through first and second plate portions 311 and 321 in the z-direction, respectively. That is, the lower end of the battery cell 100 may be inserted into the insertion portion 314 of the first plate portion 311 and exposed downward, and the upper end of the battery cell 100 may be inserted into the insertion portion 324 of the second plate portion 321 and exposed upward. As described above, the first and second bus bars 410 and 420 may be electrically connected through the exposed upper end of the battery cell 100.

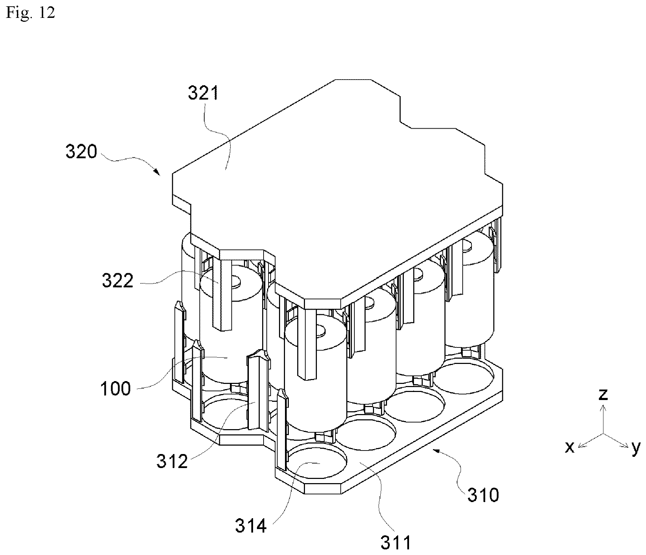

FIG. 12 is a perspective view of a battery cell and first and second frames according to another embodiment of the present disclosure.

Referring to FIG. 12, in some embodiments, the insertion portions 314 and 324 may be provided by being recessed in the first and second plate portions 311 and 321. The insertion portion 314 may be provided by being recessed from the upper surface of the first plate portion 311 and the insertion portion 324 may be provided by being recessed from the lower surface of the second plate portion 321. The lower and upper ends of the battery cells 100 may be seated in the insertion portions 314 and 324 of the first and second plate portions 311 and 321, respectively, but may not be exposed in the vertical direction. Meanwhile, in some embodiments, the first and second bus bars 410 and 420 may be provided inside the first plate portion 311. In some embodiments, the first plate portion 311 may be molded such that the first and second bus bars 410 and 420 are located on the inside during injection molding. The first and second bus bars 410 and 420 may be electrically connected to the rivet 113 and the can 110 of the battery cell 100 inside the second plate portion 321. As the first and second bus bars 410 and 420 provided inside the second plate portion 321 are spatially separated, a short circuit may be prevented by the second plate portion 321 made of an insulating material. That is, when the first and second bus bars 410 and 420 are provided inside the second plate portion 321, the insulating portion 430 may be unnecessary.

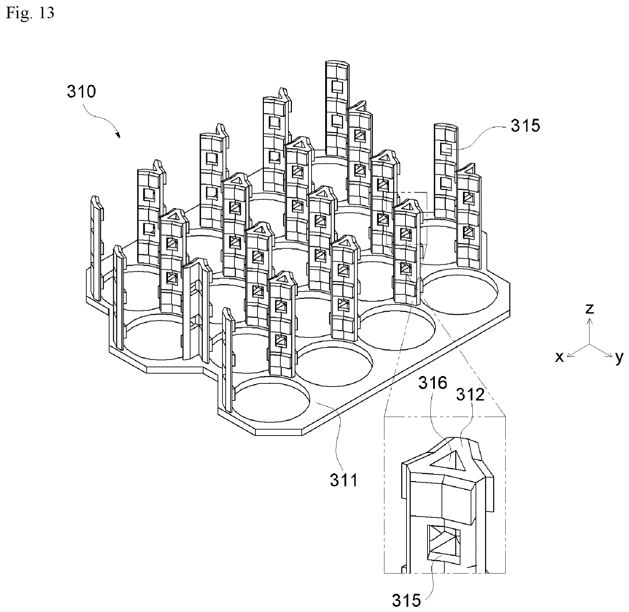

FIG. 13 is a perspective view of a first frame according to still another embodiment of the present disclosure.

Referring to FIG. 13, in some embodiments, at least a portion of each of the first and second support portions 312 and 322 may be provided with a first passing portion 315 passing through each of the first and second support portions 312 and 322 in the lateral direction. The drawing illustrates an embodiment in which the first passing portions 315 are provided in all the first support portions 312 in the first frame 310. The first passing portions 315 may be provided between the first and second protrusions 313 and 323 spaced apart from each other in the vertical direction.

In some embodiments, at least a portion of each of the first and second support portions 312 and 322 may be provided with a second passing portion 316 passing through each of the first and second support portions 312 and 322 in the vertical direction. The drawing illustrates an embodiment in which the second passing portions 316 are provided in some of the first and second support portions 312 and 322 that support three battery cells 100 in the first frame 310 and the second passing portions 316 are not provided in the remaining first and second support portions 312 and 322.

The volumes and weights of the first and second frames 310 and 320 may be further reduced by the first and second passing portions 315 and 316. In addition, when the insulating oil is accommodated inside the housing 210, the fluidity of the insulating oil may be improved, and the battery cell 100 within the cell assembly 300 may be uniformly cooled, and a temperature deviation may be minimized.

Meanwhile, in some embodiments, when the battery cell 100 and the first and second plate portions 311 and 321 are combined, the end of the first support portion 312 may be supported on the second plate portion 321, and the end portion of the second support portion 322 may be supported on the first plate portion 311. That is, the heights of the first and second support portions 312 and 322 may be the same as the vertical interval between the first and second plate portions 311 and 321.

In some embodiments, the heights of the first and second frames 310 and 320 in a state in which the first and second frames 310 and 320 are coupled to the battery cell 100 may be the same as the height of the can 110. That is, the sum of the thickness of the first plate portion 311, the thickness of the second plate portion 321, and the height of the first support portion 312 (or the second support portion 322) may be the same as the height of the can 110.

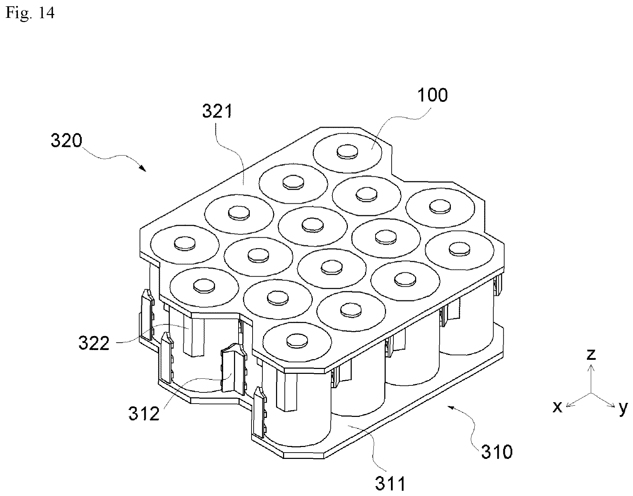

FIG. 14 is a perspective view of a battery cell and first and second frames according to yet another embodiment of the present disclosure.

Referring to FIG. 14, in some embodiments, when the battery cell 100 and the first and second plate portions 311 and 321 are combined, the end of the first support portion 312 may not be supported on the second plate portion 321, and the end portion of the second support portion 322 may not be supported on the first plate portion 311. That is, the heights of the first and second support portions 312 and 322 may be lower than the vertical interval between the first and second plate portions 311 and 321. Compared with the embodiment illustrated in FIG. 7, the embodiment shown in FIG. 14 may have the first and second support portions 312 and 322 with lower heights. The end portion of the first support portion 312 may be spaced apart from the second plate portion 321, the end of the second support portion 322 may be spaced apart from the first plate portion 311, a contact area between the first and second frames 310 and 320 and the battery cell 100 may be further reduced, and the cooling efficiency of the battery cell 100 may be improved.

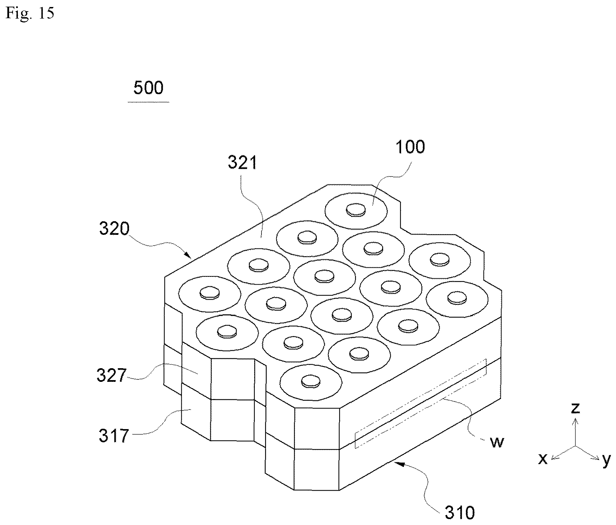

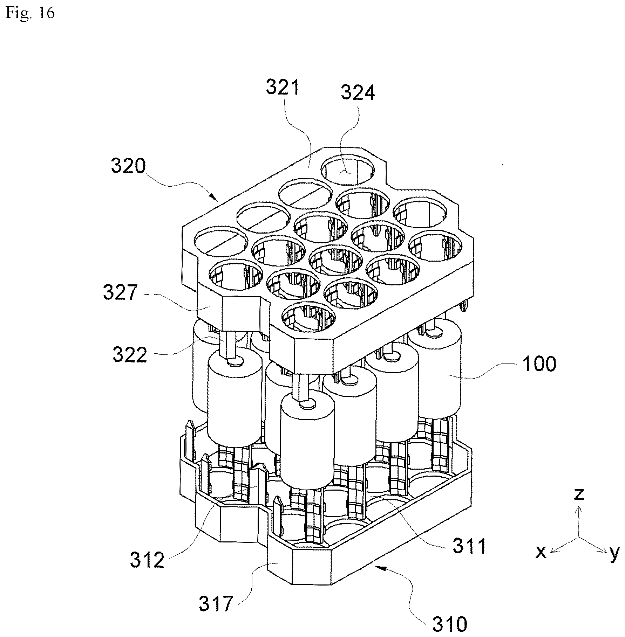

FIG. 15 is a schematic perspective view of a cell assembly according to yet another embodiment of the present disclosure. FIG. 16 is an exploded perspective view of the cell assembly illustrated in FIG. 15.

Compared to the cell assembly 300 illustrated in FIGS. 5 to 14, the cell assembly 500 illustrated in FIGS. 15 and 16 may further comprise first and second side wall portions 317 and 327 without comprising the case 330. The detailed description of the same configurations will be omitted and differences will be mainly described.

Referring to FIGS. 15 and 16, in some embodiments, the secondary battery 200 may comprise a cell assembly 500 and a housing 210 in which one or more cell assemblies 500 are accommodated. The cell assembly 500 may comprise a battery cell 100 and first and second frames 310 and 320.

In some embodiments, the first frame 310 may comprise a first plate portion 311, a first support portion 312 protruding from an upper surface of the first plate portion 311 and supporting a side surface of the battery cells 100, and a first side wall portion 317 protruding from an edge of the first plate portion 311. In addition, the second frame 320 may comprise a second plate portion 321, a second support portion 322 protruding from an upper surface of the second plate portion 321 and supporting a side surface of the battery cells 100, and a second side wall portion 327 protruding from an edge of the second plate portion 321.

In some embodiments, the first support portion 312 may be provided on the inner side of the first side wall portion 317, and the second support portion 322 may be provided on the inner side of the second side wall portion 327. The battery cell 100 may be provided on the inner sides of the first and second side wall portions 317 and 327 in a state where the first and second frames 310 and 320 and the battery cell 100 are combined.

In some embodiments, end portions of the first side wall portion 317 and the second side wall portion 327 may be supported by each other. The end portions of the first and second side wall portions 317 and 327 are supported by each other, and the first and second side wall portions 317 and 327 may be at least a portion of the side wall of the cell assembly 500. That is, the first and second plate portions 311 and 321 may constitute an upper surface and a lower surface of the cell assembly 500, and the first and second side wall portions 317 and 327 may constitute the side surfaces of the cell assembly 300.

In some embodiments, the first side wall portion 317 and the second side wall portion 327 may be joined to each other. The end portions of the first and second side wall portions 317 and 327 that are supported by each other may be joined to each other. In some embodiments, the first and second side wall portions 317 and 327 may be joined to each other while at least portions of end portion areas supported by each other are welded (see reference symbol W).

In some embodiments, the cell assembly 500 comprising the first and second side wall portions 317 and 327 may be directly accommodated in the housing 210. Such a structure may be a cell-to-pack structure in which a module housing is omitted or simplified. Therefore, the space utilization rate may be increased, thereby improving energy density, reducing the number of parts and processes, and improving manufacturing efficiency.

In some embodiments, similar to the protruding and recessed structure 331 of the case 300, the first and second side wall portions 317 and 327 may also comprise protruding and recessed structures so that adjacent cell assemblies 500 may interlock with each other. The protruding and recessed structures are provided on both side surfaces of the first and second side wall portions 317 and 327 in the x-direction, so that the first and second side wall portions 317 and 327 of the adjacent cell assemblies 500 may interlock with each other.

According to the secondary battery with such a structure, the space utilization rate is increased, thereby improving energy density, reducing the number of components and processes, and improving manufacturing efficiency. In addition, assembly convenience may be improved, and the battery cells may be easily supported and fixed. In addition, the cooling efficiency of the battery cell may be improved. In addition, secondary batteries of various specifications may be easily produced.

Embodiments of the present disclosure can provide a secondary battery. In addition, some embodiments of the present disclosure can provide a secondary battery to which a cell-to-pack structure is applied.

In addition, some embodiments of the present disclosure can provide a secondary battery with improved assembly convenience.

In addition, some embodiments of the present disclosure can provide a secondary battery with improved cooling efficiency.

Some of the aspects of the present disclosure are as follows:
Aspect 1: A secondary battery (200) comprising: a cell assembly (300) comprising battery cells (100), first and second frames (310, 320) coupled to the battery cells (100), and a case (330) accommodating the battery cells (100) and the first and second frames (310, 320); and a housing (210) in which one or more cell assemblies (300) are accommodated, wherein the first frame (310) comprises a first plate portion (311) and a first support portion (312) protruding from an upper surface of the first plate portion (311) and supporting a side surface of the battery cells (100), and the second frame (320) comprises a second plate portion (321) and a second support portion (322) protruding from a lower surface of the second plate portion (321) and supporting the side surface of the battery cells (100).
Aspect 2: The secondary battery (200) of aspect 1, wherein the case (330) is provided so that an inner side surface is supported by the first and second frames (310, 320).
Aspect 3: The secondary battery (200) according to any one of the preceding aspects, wherein each of the battery cells (100) is supported by one or more first support portions (312) and one or more second support portions (322).
Aspect 4: The secondary battery (200) according to any one of the preceding aspects, wherein an inside of the housing (210) is filled with a filler.
Aspect 5: The secondary battery (200) according to any one of the preceding aspects, wherein insulating oil is accommodated in the housing (210), and the battery cells (100) are immersed in the insulating oil.
Aspect 6: The secondary battery (200) according to any one of the preceding aspects, wherein first and second protrusions (313, 323) supporting the side surfaces of the battery cells (100) are provided on the first and second support portions (312, 322), respectively.
Aspect 7: The secondary battery (200) according to any one of the preceding aspects, wherein a plurality of first and second protrusions (313, 323) spaced apart in a vertical direction are provided.
Aspect 8: The secondary battery (200) according to any one of the preceding aspects, wherein the first protrusion (313) protrudes obliquely downward, and the second protrusion (323) protrudes obliquely upward.
Aspect 9: The secondary battery (200) according to any one of the preceding aspects, wherein each of the first and second plate portions (311, 321) is provided with insertion portions (314, 324) into which end portions of the battery cells (100) are inserted.
Aspect 10: The secondary battery (200) according to any one of the preceding aspects, wherein the insertion portions (314, 324) are provided to pass through the first and second plate portions (311, 321).
Aspect 11: The secondary battery (200) according to any one of the preceding aspects, wherein the insertion portions (314, 324) are provided by being recessed in the first and second plate portions (311, 321).
Aspect 12: The secondary battery (200) according to any one of the preceding aspects, wherein at least some of the first and second support portions (312, 322) are provided with first passing portions (315) passing through the first and second support portions (312, 322) in a lateral direction.
Aspect 13: The secondary battery (200) according to any one of the preceding aspects, wherein at least some of the first and second support portions (312, 322) are provided with second passing portions (316) passing through the first and second support portions (312, 322) in a vertical direction.
Aspect 14: A secondary battery (500) comprising: a cell assembly (300) comprising battery cells, and first and second frames (310, 320) coupled to the battery cells (100); and a housing (210) in which one or more cell assemblies (300) are accommodated, wherein the first frame (310) comprises a first plate portion (311), a first support portion (312) protruding from an upper surface of the first plate portion (311) and supporting a side surface of the battery cells (100), and a first side wall portion (317) protruding from an edge of the first plate portion (311), and the second frame (320) comprises a second plate portion (321) a second support portion (322) protruding from a lower surface of the second plate portion (321) and supporting the side surface of the battery cells (100), and a second side wall portion (327) protruding from an edge of the second plate portion (321).
Aspect 15: The secondary battery (500) of aspect 14, wherein end portions of the first side wall portion (317) and the second side wall portion (327) are supported by each other.

The above description is only an example to which the principle of the present disclosure is applied, and other configurations may be further comprised without departing from the scope of the present disclosure.

## Claims

1. A secondary battery (200) comprising:
a cell assembly (300) comprising battery cells (100), first and second frames (310, 320) coupled to the battery cells (100), and a case (330) accommodating the battery cells (100) and the first and second frames (310, 320); and
a housing (210) in which one or more cell assemblies (300) are accommodated,
wherein the first frame (310) comprises a first plate portion (311) and a first support portion (312) protruding from an upper surface of the first plate portion (311) and supporting a side surface of the battery cells (100), and
the second frame (320) comprises a second plate portion (321) and a second support portion (322) protruding from a lower surface of the second plate portion (321) and supporting the side surface of the battery cells (100).

2. The secondary battery (200) of claim 1, wherein the case (330) is provided so that an inner side surface is supported by the first and second frames (310, 320).

3. The secondary battery (200) according to any one of the preceding claims, wherein each of the battery cells (100) is supported by one or more first support portions (312) and one or more second support portions (322).

4. The secondary battery (200) according to any one of the preceding claims, wherein an inside of the housing (210) is filled with a filler.

5. The secondary battery (200) according to any one of the preceding claims, wherein insulating oil is accommodated in the housing (210), and the battery cells (100) are immersed in the insulating oil.

6. The secondary battery (200) according to any one of the preceding claims, wherein first and second protrusions (313, 323) supporting the side surfaces of the battery cells (100) are provided on the first and second support portions (312, 322), respectively.

7. The secondary battery (200) according to any one of the preceding claims, wherein a plurality of first and second protrusions (313, 323) spaced apart in a vertical direction are provided.

8. The secondary battery (200) according to any one of the preceding claims, wherein the first protrusion (313) protrudes obliquely downward, and the second protrusion (323) protrudes obliquely upward.

9. The secondary battery (200) according to any one of the preceding claims, wherein each of the first and second plate portions (311, 321) is provided with insertion portions (314, 324) into which end portions of the battery cells (100) are inserted.

10. The secondary battery (200) according to any one of the preceding claims, wherein the insertion portions (314, 324) are provided to pass through the first and second plate portions (311, 321).

11. The secondary battery (200) according to any one of the preceding claims, wherein the insertion portions (314, 324) are provided by being recessed in the first and second plate portions (311, 321).

12. The secondary battery (200) according to any one of the preceding claims, wherein at least some of the first and second support portions (312, 322) are provided with first passing portions (315) passing through the first and second support portions (312, 322) in a lateral direction.

13. The secondary battery (200) according to any one of the preceding claims, wherein at least some of the first and second support portions (312, 322) are provided with second passing portions (316) passing through the first and second support portions (312, 322) in a vertical direction.

14. A secondary battery (500) comprising:
a cell assembly (300) comprising battery cells, and first and second frames (310, 320) coupled to the battery cells (100); and
a housing (210) in which one or more cell assemblies (300) are accommodated,
wherein the first frame (310) comprises a first plate portion (311), a first support portion (312) protruding from an upper surface of the first plate portion (311) and supporting a side surface of the battery cells (100), and a first side wall portion (317) protruding from an edge of the first plate portion (311), and
the second frame (320) comprises a second plate portion (321) a second support portion (322) protruding from a lower surface of the second plate portion (321) and supporting the side surface of the battery cells (100), and a second side wall portion (327) protruding from an edge of the second plate portion (321).

15. The secondary battery (500) of claim 14, wherein end portions of the first side wall portion (317) and the second side wall portion (327) are supported by each other.
